Europäisches Patentamt

European Patent Office

Office européen des brevets

(11) Veröffentlichungsnummer: **0 416 428 A2**

## (12) EUROPÄISCHE PATENTANMELDUNG

(21) Anmeldenummer: **90116424.4**

(22) Anmeldetag: **28.08.90**

(51) Int. Cl.5: **G01F 11/02**

(30) Priorität: **06.09.89 DE 3929588**

(43) Veröffentlichungstag der Anmeldung:
**13.03.91 Patentblatt 91/11**

(84) Benannte Vertragsstaaten:
**AT BE CH DE ES FR GB IT LI NL SE**

(71) Anmelder: **NORDMARK ARZNEIMITTEL GmbH.**
**Pinnauallee 4**
**W-2082 Uetersen(DE)**

(72) Erfinder: **Matz, Ludwig**
**Friedrichstrasse 53**
**W-2082 Tornesch(DE)**

(74) Vertreter: **Schweiss, Werner, Dr. et al**
**BASF Aktiengesellschaft Patentabteilung**
**Carl-Bosch-Strasse 38**
**W-6700 Ludwigshafen(DE)**

(54) **Dosiervorrichtung für stückige und pulverförmige Güter.**

(57) Vorrichtung zur portionsweisen Entnahme und Dosierung von stückigen oder pulverförmigen Gütern 2 aus Vorratsbehältnissen 6 mittels eines an einem Stiel/Griff 16 befestigten Produktaufnahmeteils 3, dadurch gekennzeichnet, daß das Produktaufnahmeteil 3 direkt in ein, mit einem verschiebbaren Kolben 17 verschlossenes Rohr 15 als Stiel/Griff 16 übergeht.

# FIG.1

## DOSIERVORRICHTUNG FÜR STÜCKIGE UND PULVERFÖRMIGE GÜTER

Die vorliegende Erfindung betrifft eine Vorrichtung zur portionsweise Entnahme und Dosierung von stückigen oder pulverförmigen Gütern aus Vorratsbehältnissen mittels eines an einem Stiel/Griff befestigten Produktaufnahmeteils. Vorrichtungen der eingangs genannten Art sind in vielfältiger Weise als Dosierlöffel bekannt. Man verwendet sie zum Dosieren von Flüssigkeiten und Pulvern.

Gemeinsam nachteilig ist diesen Konstruktionen, daß man mit ihnen keine genauen Dosierungen variabler und häufig auch konstanter Mengen/Volumen vornehmen kann.

Schwierig ist auch die Dosierung von gleichförmigen grobstückigen Produkten. Dieses Problem ist häufig nur durch Nachzählen lösbar, es sei denn, es steht ein teurer Dosierer mit Zähleinrichtung zur Verfügung.

Nachteilig ist weiterhin, daß mit einem der üblichen Dosierlösffel stückige und pulverförmige Güter nicht vollständig aus Vorratsbehältnissen entnommen werden können. Die Vorratsbehältnisse müssen gekippt werden, um die Güter auf den Dosierlöffel zu schütten, was bei großen Flaschenmündungen schwierig ist und häufig zum Verschütten von Gütern führt.

Aufgabe der vorliegenden Erfindung war es daher, eine Vorrichtung zur Entnahme und Dosierung von stückigen und/oder pulverförmigen Gütern aus Vorratsbehältnissen zu entwickeln, mit der es in einfacher Weise zuverlässig möglich wird,

1. stückige und/oder pulverförmige Güter aus Vorratsbehältnissen zu entnehmen und diese variabel, den Vorgaben entsprechend nach Volumen oder Menge zu dosieren,

2. Vorratsbehältnis vollständig zu entleeren,

3. stückige und/oder pulverförmige Güter zu dosieren und

4. eine hohe Genauigkeit und Reproduzierbarkeit bei der Dosierung zu erzielen.

Diese Aufgabe wurde erfindungsgemäß dadurch gelöst, daß das Produktaufnahmeteil direkt in ein, mit einem verschiebbaren Kolben verschlossenes Rohr als Stiel/Griff übergeht.

Vorteilhafte Ausgestaltungen sind Gegenstand der Unteransprüche 2 bis 15.

Mit dieser Vorrichtung ist es möglich, stückige und/oder pulverförmige Güter (2) einem Vorratsbehältnis (6) zu entnehmen und in gewünschten, den Bedürfnissen entsprechenden Volumen oder Mengen variabel zu dosieren.

Die zu dosierende Menge 18 oder das zu dosierende Volumen 18 werden vor der Entnahme aus dem Vorratsgefäß 6 mit Hilfe der auf dem Stiel/Griff 16 befindlichen Markierungen 20 und dem verschiebbaren Kolben 17 eingestellt. Die mit der Dosiervorrichtung dosierten Mengen 18 oder die dosierten Volumina 18 haben eine gegenüber herkömmlichen Dosierlöffeln wesentlich verbesserte Konstanz und Genauigkeit, auch bezogen auf die Abmessung von Flüssigkeiten.

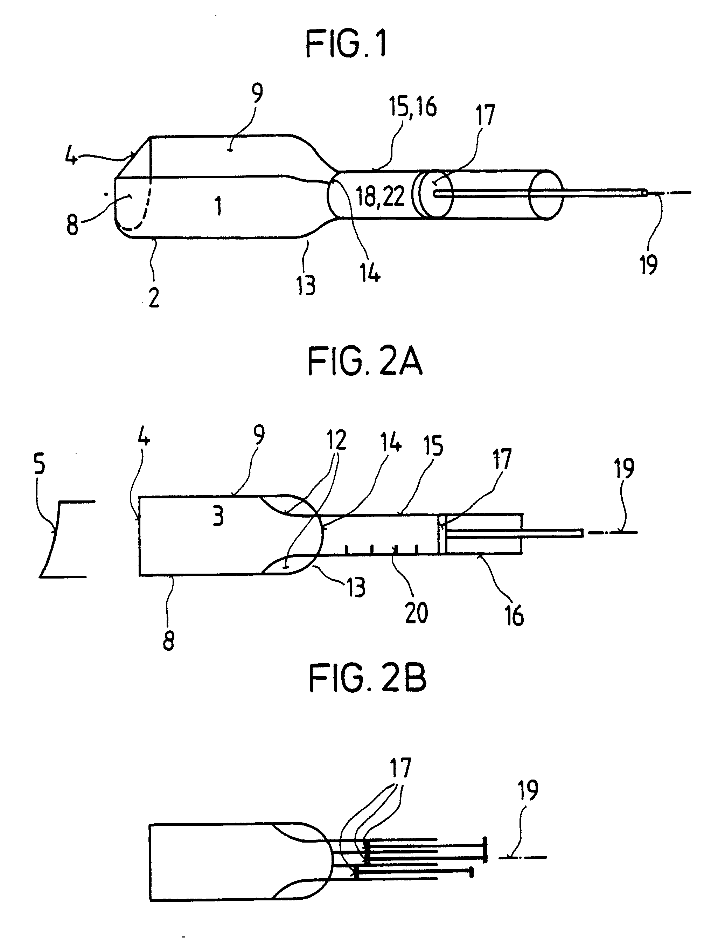

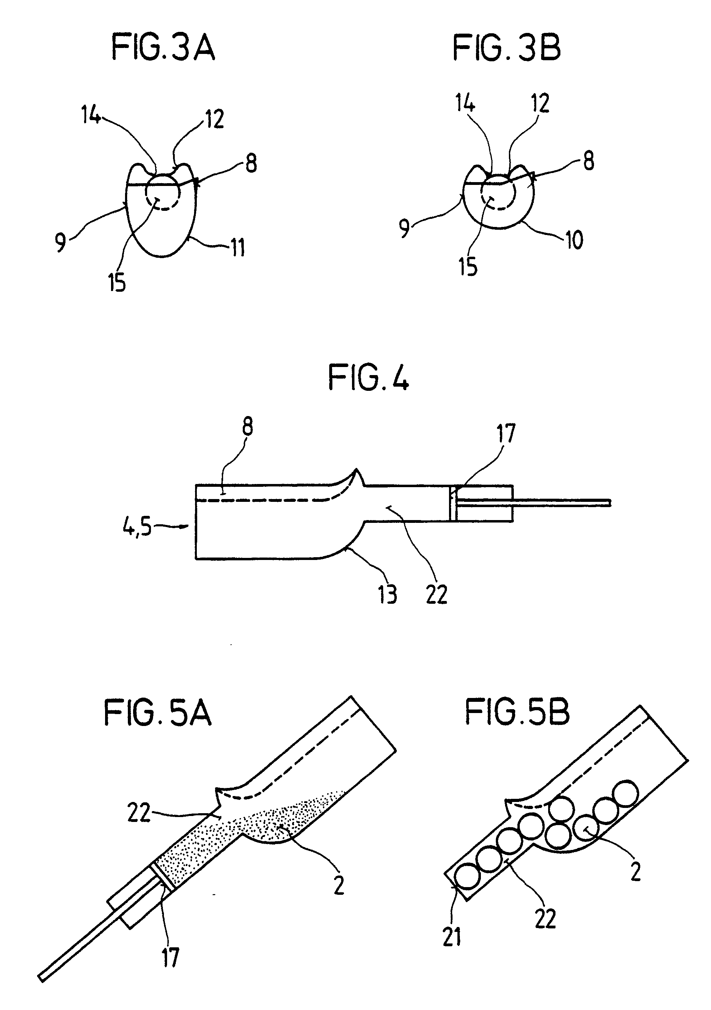

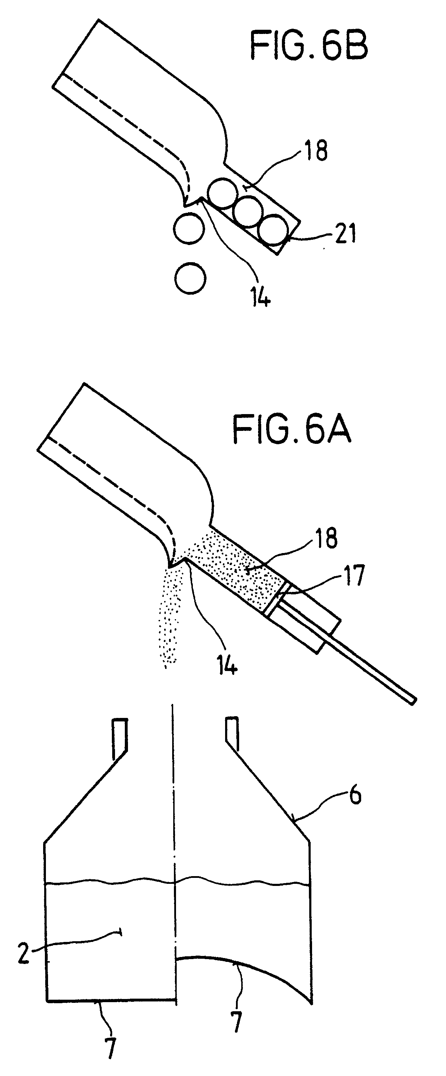

Die Erfindung wird nachstehend anhand der Figuren 1 bis 6 näher erläutert.

Es zeigen:

Fig. 1: Eine Ansicht der Dosiervorrichtung 1

Fig. 2a: Eine Aufsicht auf die Dosiervorrichtung 1 mit voreingestelltem(r) Dosiervolumen/Dosiermenge 18

Fig. 2b: Eine Aufsicht auf die Dosiervorrichtung 1 mit einem Stiel/Griff 16 mit mehreren Rohren 15 und mit voreingestelltem(r) Dosiervolumen/Dosiermenge 18

Fig. 3a: Einen Querschnitt durch die Dosiervorrichtung 1 mit einem Boden mit ellipsenförmigem Querschnitt 11

Fig. 3b: Einen Querschnitt durch die Dosiervorrichtung 1 mit einem Boden mit rundem Querschnitt 10

Fig. 4: Einen Längsschnitt durch die Dosiervorrichtung 1 mit voreingestelltem(r) Dosiervolumen/Dosiermenge 18

Fig. 5a: Einen Längsschnitt durch die gefüllte Dosiervorrichtung 1 mit voreingestelltem(r) Dosiervolumen/Dosiermenge 18 während der Befüllung des freien Rohrvolumens 22 aus dem Produktaufnahmeteil 3

Fig. 5b: Einen Längsschnitt durch die gefüllte Dosiervorrichtung 1 mit fest vorgegebenem(r) Dosiervolumen/Dosiermenge 18 während der Befüllung des freien Rohrvolumens 22 aus dem Produktaufnahmeteil 3

Fig. 6a: Einen Längsschnitt durch die gefüllte Dosiervorrichtung 1 mit voreingestelltem(r) Dosiervolumen/Dosiermenge 18 während der Rückgabe der überschüssigen stückigen oder pulverförmigen Güter 2 in das Vorratsbehältnis 6

Fig. 6b: Einen Längsschnitt durch die gefüllte Dosiervorrichtung 1 mit fest voreingegebenem(r) Dosiervolumen/Dosiermenge 18 während der Rückgabe der überschüssigen stückigen Güter 2 in das Vorratsbehältnis 6

Eine Dosiervorrichtung 1 enthält stückige oder pulverförmige Güter 2.

Das Produktaufnahmeteil 3 ist begrenzt durch eine plane 1. Stirnseite 4 oder eine dem Vorratsbehälterboden 7 angepapte 1. Stirnseite 5, die bei der vollständigen Entleerung von Vorratsgefäßen 6 hilfreich ist, einer tangential auslaufenden Seitenwand 8, der gegenüberliegenden Seitenwand 9, dem sie verbindenden Boden mit rundem 10 oder ellipsenförmigem 11 Querschnitt und der in eine Verjüngung 12 übergehenden 2. Stirnseite 13.

Eine Öffnung in der 2. Stirnseite 13 geht entweder direkt in das Rohr 15 über, oder sie wird verwendet um ein Rohr 15 durch Schweißen, Verknüpfen oder Verschrauben mit dem Produktaufnahmeteil 3 zu verbinden.

Die Kante 14 am Ende der Verjüngung 12 ist der Beginn des Überganges vom Produktaufnahmeteil 3 in den als Rohr 15 ausgebildeten Stiel/Griff 16. Das Rohr 15 enthält einen als verschiebbaren Kolben 17 ausgebildeten Verschluß.

Gleichzeitig ist diese Kante 14 die feste obere Begrenzung des(r) mit dem verschiebbaren Kolben 17 im Rohr 15 einstellbaren Dosiervolumens/Dosiermenge 18.

Man füllt das Produktaufnahmeteil 3 der Dosiervorrichtung 1 in einem Vorratsgefäß 6 mit stükkigen oder pulverförmigen Gütern 2, wobei die tangential auslaufende Seitenwand 8 die vollständige Befüllung, besonders bei geringer Restmenge im Vorratsgefäß 6 unterstützt. Anschließend nimmt man die Dosiervorrichtung 1 aus dem Vorratsgefäß 6 heraus.

Die Befüllung des freien Rohrvolumens 22 mit stückigen oder pulverförmigen Gütern 2 geschieht dann aus dem Produktaufnahmeteil 3 durch Schwenken der Dosiervorrichtung 1 in eine, dem Böschungswinkel der stückigen oder pulverförmigen Güter 2 entsprechenden Schräglage.

Die Portionierung des(r) Dosiervolumens/Dosiermenge 18 geschieht durch Drehen der Dosiervorrichtung 1 in Schräglage umd die Rohrachse 19. Zuviel aus dem Vorratsgefäß 6 entnommene stückige oder pulverförmige Güter 2 fallen durch die Verjüngung 12 des Produktaufnahmeteils 3 in ein Gefäß, z.B. das Vorratsgefäß 6 zurück. Das (die) portionierte Dosiervolumen/Dosiermenge 18 wird in das Produktaufnahmeteil 3 zurück gekippt und kann hieraus auf beliebige Art entnommen werden.

Regelmäßig geformte stückige Güter 2 können mit der Ausführung der Dosiervorrichtung 1 deren Stiel/Griff 16 aus mehreren Rohren 15 besteht stückgenau dosiert werden. Hierzu stellt man die einzeln oder gemeinsam verschiebbaren Kolben 17 auf die gewünschte Dosiermenge 18 ein und verfährt wie beschrieben.

## Ansprüche

1. Vorrichtung zur portionsweisen Entnahme und Dosierung von stückigen oder pulverförmigen Gütern (2) aus Vorratsbehältnissen (6) mittels eines an einem Stiel/Griff (16) befestigten Produktaufnahmeteils (3), dadurch gekennzeichnet, daß das Produktaufnahmeteil (3) direkt in ein, mit einem verschiebbaren Kolben (17) verschlossenes Rohr (15) als Stiel/Griff (16) übergeht.

2. Vorrichtung nach Anspruch 1, dadurch gekennzeichnet, daß das Produktaufnahmeteil (3) einen Boden mit rundem Querschnitt (10) hat, dessen Radius größer ist, als der des Rohres (15).

3. Vorrichtung nach Anspruch 1 und 2, dadurch gekennzeichnet, daß die Öffnung des Produktaufnahmeteils (3) kleiner oder gleich 180° ist.

4. Vorrichtung nach Anspruch 1 bis 3, dadurch gekennzeichnet, daß eine Seitenwand (8) des Produktaufnahmeteils (3) tangential ausläuft.

5. Vorrichtung nach Anspruch 1 bis 4, dadurch gekennzeichnet, daß die 1. Stirnseite (4) des Produktaufnahmeteils (3) plan in einem Winkel von vorzugsweise 90° zur Rohrachse (19) steht.

6. Vorrichtung nach Anspruch 1 bis 5, dadurch gekennzeichnet, daß die 1. Stirnseite (5) des Produktaufnahmeteils (3) in seiner Wölbung (7) dem Boden eines Vorratsgefäßes (6) angepaßt ist.

7. Vorrichtung nach Anspruch 1 bis 6, dadurch gekennzeichnet, daß der Übergang vom Produktaufnahmeteil (3) in das Rohr (15) als Verjüngung (12) ausgeführt ist.

8. Vorrichtung nach Anspruch 1 bis 7, dadurch gekennzeichnet, daß die Verjüngung (12) des Produktaufnahmeteils (3) die in ihm enthaltenen stückigen oder pulverförmigen Güter (2) teilweise einschließt.

9. Vorrichtung nach Anspruch 1 bis 8, dadurch gekennzeichnet, daß die Kante (14) am Endpunkt der Verjüngung (12) des Produktaufnahmeteils (3) als Maximum für das zu dosierende Volumen/Menge (18) verwendet wird.

10. Vorrichtung nach Anspruch 1 bis 9, dadurch gekennzeichnet, daß sich Markierungen (20) für die zu dosierenden Mengen/Volumina (18) auf dem als Rohr (15) ausgebildeten Stiel/Griff (16) befinden.

11. Vorrichtung nach Anspruch 1 bis 10, dadurch gekennzeichnet, daß die zu dosierenden Mengen/Volumina (18) mittels der Markierungen (20) und des verschiebbaren Kolbens (17) vor der Entnahme aus einem Vorratsgefäß (6) eingestellt werden.

12. Vorrichtung nach Anspruch 1 bis 11, dadurch gekennzeichnet, daß das Produktaufnahmeteil (3) mit dem als Rohr (15) ausgebildeten Stiel/Griff (16) verschraubt, verschweißt oder verknüpft wird.

13. Vorrichtung nach Anspruch 1 bis 12, dadurch gekennzeichnet, daß das Produktaufnahmeteil (3) einen Boden mit ellipsenförmigem Querschnitt (11) hat.

14. Vorrichtung nach Anspruch 1 bis 13, dadurch gekennzeichnet, daß der als Verschluß des Rohres (15) dienende verschiebbare Kolben (17) für besondere Einsatzfälle durch einen festen Boden (21) ersetzt werden kann.

15. Vorrichtung nach Anspruch 1 bis 14, dadurch gekennzeichnet, daß das Produktaufnahmeteil (3) in einen aus mehreren Rohren (15) bestehenden Stiel/Griff (16) übergeht, welche durch verschiebbare Kolben (17) oder feste Böden (21) verschlossen sind.

# FIG. 1

# FIG. 2A

# FIG. 2B

EP 0 416 428 A2

## FIG.3A

## FIG.3B

## FIG.4

## FIG.5A

## FIG.5B

# FIG.6B

18

21

14

# FIG.6A

18

17

14

6

2

7

7